**Europäisches Patentamt**

**European Patent Office**

**Office européen des brevets**

(19)

(11) Publication number: **0 110 122**
A1

(12) # EUROPEAN PATENT APPLICATION

(21) Application number: **83110654.7**

(22) Date of filing: **25.10.83**

(51) Int. Cl.³: **G 01 B 7/14**

(30) Priority: **29.10.82 FI 823703**

(43) Date of publication of application: **13.06.84**
**Bulletin 84/24**

(84) Designated Contracting States: **DE FR GB SE**

(71) Applicant: **Valmet Oy, Punanotkonkatu 2,**
**SF-00130 Helsinki 13 (FI)**

(72) Inventor: **Hannukainen, Hannu, Tellervonkatu 14-16 B1,**
**SF-40200 Jyväskylä 20 (FI)**

(74) Representative: **Grupe, Peter, Dipl.-Ing. et al,**
**Patentanwaltsbüro**
**Tiedtke-Bühling-Kinne-Grupe-Pellmann-Grams-Struif**
**Bavariaring 4, D-8000 München 2 (DE)**

(54) **Pick-up for transforming mechanical quantities into electrical quantities.**

(57) A pick-up for transforming mechanical into electrical quantities, to the purpose of observing the position of a moving member e.g. in a tractor. The pick-up converts the position of the member (14) being observed into an electric signal ($V_{out}$). The present pick-up is based on using a Hall element (10). The Hall element (10) has been disposed in conjunction with a permanent magnet (11), and the pick-up comprises an electronic unit (20) fixedly accommodated in the pick-up's protective structure (13), in conjunction with said Hall element (10). By the electronic unit, the voltage ($V_{in}$) supplied by the Hall element (10) is amplified to an output voltage ($V_{out}$) adequate in level and which is substantially linearly dependent on the distance between the body (14) of ferromagnetic material that is being observed and the Hall element (10). The protective housing of the pick-up is a socket (13) of non-magnetic material such as aluminium or hard plastic, in one end thereof being fitted the permanent magnet (11), on the outer end face (11') of which the Hall element (10) has been applied.

Pick-up for transforming mechanical quantities into electrical quantities

The present invention concerns a pick-up or transducer for transforming mechanical into electrical quantities, in particular a pick-up intended for observation of the position of a movable member in a tractor or equivalent, said pick-up transforming the position of the movable member into an electric signal, and said pickup being based on an application of the Hall effect.

The conversion of various mechanical quantities into electrical values is problematic because heretofore no such pick-up has been in use which contains no components susceptible to damage, which does not display temperature creep nor need of adjustment.

The main object of the invention is therefore to provide a pick-up meeting the aims mentioned. It is an additional object of the invention to provide a pickup of simple structure and reliable in its operation for position sensing. A need to sense various machine elements occurs e.g. in connection with tractors and other traction and work machines. In these practical applications there is particularly evident the need of reliable position indication with a pick-up having no components susceptible to damage, and tolerating impurities, and which is not sensitive to ambient temperature variations.

The position sensing applications in tractors include the position observation of force-measuring flexure bars, of angle-measuring cams, of various levers and linkage or other rods, or of various components in the steering gear, towards purposes of control or safety.

The need of pick-ups constituting the object of the invention is particularly acute in tractor control systems, where is needed e.g. continuous observing of the lifting means or of force-measuring flexure bars. Since the control systems in question are predominantly electrical, there is also a need to obtain from the pick-up a signal of high enough voltage or current level and which is dependent on the position of the member that is being observed.

In prior art are known so-called proximity switches by which one obtains ON/OFF information concerning a closely positioned object. Furthermore known in the art are the so-called linear output Hall effect transducers, as an example the PK 8764 3 by Micro Switch. These pick-ups, and others of which we are aware, have however not been able to solve all the problems mentioned, particularly not when such pick-ups would be needed in adverse operating conditions, as is the case for instance in a tractor.

An additional object of the present invention is observation of movement or position without having to interfere with the metallic body itself of which the position is observed, and the object of the invention is therefore to provide a pick-up which does not require a permanent magnet to be fixed on the member that is being observed.

The starting point for the present invention was to apply the so-called Hall element. The operation of these elements is based on the fact that in an electrical conductor in a magnetic field is produced an electric field perpendicular against the current and proportional to the current and to the magnetic field. The path of the current-carrying charged particles, electrons for instance, becomes curved, implying the generation of an electric field at right angles against the original direction of current. If the conductor is a thin strip, it becomes possible directly to measure the potential difference between its sides, the so-called Hall voltage, which is inversely proportional to the thickness of the strip. Since the strength of the Hall phenomenon is dependent on the properties of the charge carriers in the respective material, it has been used (especially in the case of semiconductors) to investigate into the quality, number and mobility of charge carriers. Since the strength of the Hall effect is proportional to the flux density of the magnetic field, it has also been used in measuring magnetic field strengths, as is well known.

In order to attain the aims mentioned above, and others which will become apparent later on, the invention is mainly characterized in that

a Hall element has been disposed in conjunction with a permanent magnet,

the pick-up comprises an electronic unit fixedly accommodated within the protective structure of the pick-up adjacent to the said Hall element, and

said electronic unit is used to amplify the voltage supplied by the Hall element to a pick-up output voltage of sufficient level and which is substantially linearly dependent on the distance between the object of ferromagnetic material that is being observed and the Hall element of the pick-up.

It is thus understood that the invention is based on using a Hall element which is advantageous as regards price, temperature characteristics and repeatability, applied in a manner more closely specified in the invention. It is not necessary in the invention to attach any electromagent or permanent magnet to the metallic part that is being measured in the invention, to wit, an object of material with good magnetic conductivity.

To advantage, the non-processible signal derived from the Hall element applied as taught by the invention is amplified in conjunction with the pick-up itself, preferably by means of a differential amplifier set-up.

In the following, the invention is described in detail with reference being made to an embodiment example of the invention, presented in the figures of the attached drawing, to the details of which the invention is in no way narrowly confined.

Fig. 1 presents, partly sectioned, a pick-up according to the invention.

Fig. 2 presents the electric circuit diagram of the pick-up of the invention.

Fig. 3 illustrates schematically the placement of the pick-up of the invention in conjunction with the object that is being measured.

Fig. 4 shows the output voltage obtained with a pick-up according to the invention, plotted over the distance of the body that is being observed.

Fig. 5 displays separately the Hall element amployed in the invention.

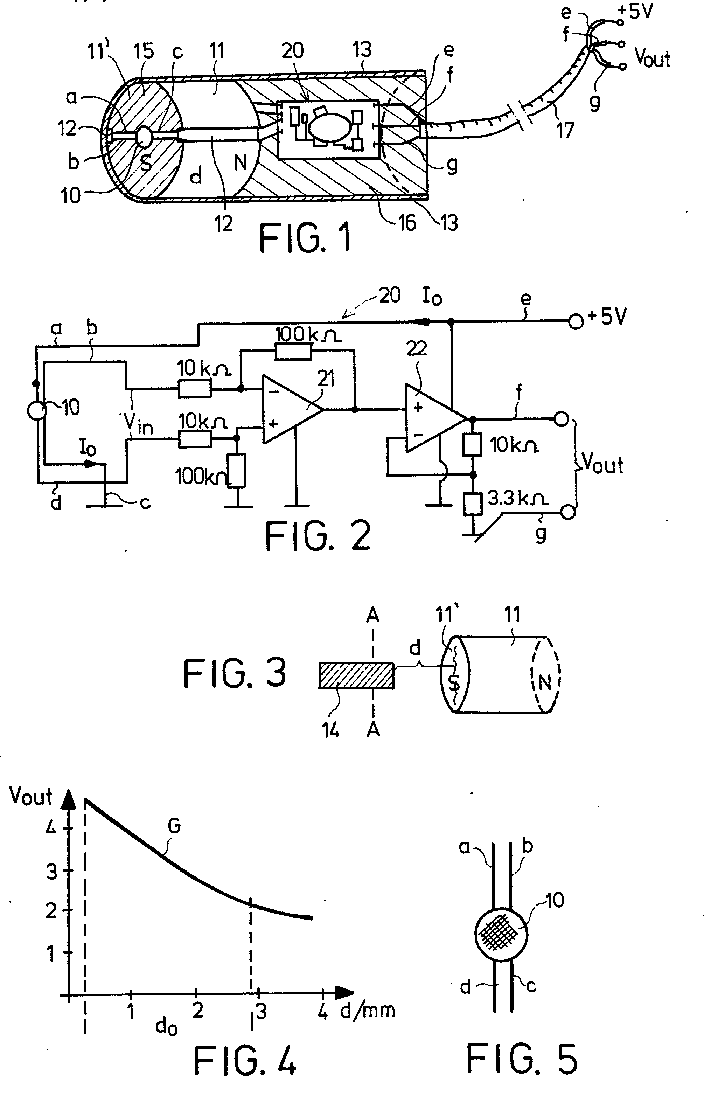

As shown in Fig. 1, the pick-up of the invention consists of a permanent magnet 11, which is a cylindrical body. The permanent magnet 11 is like a bar magnet, so that its S and N poles can be imagined to be located at the planar ends of the cylinder. In conjunction with a permanent magnet of this kind is formed a closed magnetic field, known in itself, between the poles S and N. The permanent magnet 11 has been inserted in a protective socket 13 of non-magnetic material, e.g. aluminium or hard plastic, with a view to achieving sufficient mechanical strength. Within the socket 13 has been placed e.g. embedded in silicone compound 16, an electronic circuit board 20, from which departs a cable 17. Through the cable 17 an appopriate operating voltage (e.g. 5 volts) is supplied to the pick-up. Furthermore, the output voltage $V_{out}$ of the pick-up is obtained through the cable 17.

On the planar outer end face 11´ of the permanent magnet 11, upon a thin insulating disk 15, has been placed a Hall element 10, from which depart the connecting leads a, b, c and d. As will be evident from Fig. 5, the Hall element 10 is a button-like, flat element having four connecting leads a-d. These leads a-d are conducted, electrically insulated from the permanent magnet 11, in grooves 12 provided in the permanent magnet, to the circuit board 20.

In the foregoing, the mechanical design of the pick-up of the invention has been described in its main features. In the following shall be described, referring to Fig. 2, an advantageous electrical embodiment example of the invention. As is well-known, the Hall element 10 is current-consuming, and it is supplied with the current $I_o$ through the lead e from the +5 V pole. The current $I_o$ is on the order of 5 mA. The other pole c of the current source is connected to ground. From the poles b and d of the Hall element the voltage $V_{in}$ is obtained, which is only on the order of 10 mV. It is thus obvious that the voltage $V_{in}$ must be considerably amplified in order to be usable to the purposes envisioned in the invention. Fig. 2 shows an advantageous amplifying circuit in which are used two operational amplifiers 21 and 22 connected in cascade, the first of the two being differentially connected. The second operational amplifier 22 is non-inverting. The gain $V_{out}/V_{in}$ of the circuit is on the order of 30 to 45.

At the poles f and g, the output voltage $V_{out}$ of the pick-up is obtained, this voltage being 2-5 volts, as can be seen in Fig. 4. Since the input voltage $V_{in}$ from the Hall element 10 has comparatively low level, the invention teaches to place the electronic board 20 in immediate conjunction with the pick-up, within its protective socket 13. It is hereby possible to avoid external interference to a sufficient degree.

As shown in Fig. 4, the output voltage $V_{out}$ of the pick-up of the invention is e.g. linearly dependent on the distance d of the object 14 that is being observed, in the manner shown by the characteristic graph G. Within the range $d_o$ on the distance scale d, the characteristic graph g is sufficiently linear with a view to needs occurring in practice. Thus, from the pick-up of the invention an output voltage $V_{out}$ is obtained which is on the order of 5-2 V. This is a voltage level which can be carried, without interference, with the cable 17 over considerable distances long enough for practical purposes, for instance to the control unit of a tractor.

In Fig. 3 is illustrated the arrangement in relation to each other of the pick-up and the body 14 that is being observed. The body 14 to be observed is for instance a cylindrical body rotating about the axis A-A, in other words an eccentric cam unit, its distance d from the end face 11´ of the pick-up varying as a function of the rotational angle of the body 14 in its rotation about the axis A-A. The body 14 consists of material having good magnetic conductivity, i.e., a ferromagnetic material. Therefore, the body 14 concentrates the magnetic field in conjunction with the Hall element 10, the stronger the smaller the distance d. As a result, a characteristic graph like the graph G in Fig. 4 is obtained.

The pick-up of the present invention is intended to be applied above all in tractors, although other applications are equally possible within the scope of the invention. In tractors, the pick-up of the invention is particularly appropriate for indicating the position of a flexural bar, the position of an eccentric cam, e.g. indication of the angle of rotation of a shaft, for sensing the position of a steering stick, indication of the neutral position of steering, observing the state of an injection pump and/or application in connection with engine overload protection. The pick-up of the invention may also be used in likeness with an ON/OFF component.

In the following are stated the claims, various details of the invention being allowed to vary within the inventive idea thereby defined and to deviate from that which has been presented in the foregoing by way of example only.

Claims

1. A pick-up for transforming mechanical quantities into electrical quantities, in particular a pick-up intended for observing the position of a movable member in a tractor or equivalent, said pick-up converting the position of the member (14) under observation into an electric signal ($V_{out}$), and said pick-up being based on use of a Hall element (10), characterized in that

the Hall element (10) has been disposed in conjunction with a permanent magnet (11),

the pick-up comprises an electronic unit (20) which has been fixedly accommodated within the protective structure (13) of the pick-up adjacent to said Hall element (10), and

by means of said electronic unit (20), the voltage ($V_{in}$) delivered by the Hall element (10) is amplified to become the pick-up's output voltage ($V_{out}$) with high enough level and which is substantially linearly dependent on the distance between the body (14) of ferromagnetic material under observation and the Hall element (10) of the pick-up.

2. Pick-up according to claim 1, characterized in that the protective housing of the pick-up is a tubular housing (13) of non-magnetic material, such as aluminium or hard plastic, in one end of which the said permanent magnet (11) has been accommodated, that on the outer end face (11ʹ) of the permanent magnet (11) has been fitted the said Hall element (10), its connecting leads (a,b,c,d) being connected to said electronic circuit board (20), and that from the electronic circuit board (20) departs the pick-up lead (17), through which the pick-up's output voltage ($V_{out}$) is taken out and the operating voltage of the pick-up is fed in.

3. Pick-up according to claim 1 or 2, characterized in that said permanent magnet is a substantially cylindrical permanent magnet body (11), the substantially planar end faces (11ʹ) of this perma-

nent magnet being the S and N poles of the permanent magnet, that said permanent magnet (11) has been placed in one end of the respective cylindrical protective tube (13), that said Hall element (10) has been affixed in insulated manner on the planar outer end face (11˝) of the permanent magnet (11), that the body (14) of which the position shall be observed has been disposed adjacent to said face (11˝) at an appropriate small distance (d), and that the direction in which moves the ferromagnetic body (14) of which the position is to be observed is substantially parallel to the cylinder axis of said protective tube (13) and permanent magnet (11).

4. Pick-up according to any one of claims 1-3, characterized in that the electronic unit (20) provided in conjunction with the pick-up comprises an amplifier circuit with at least two amplifier stages (21,22) following after each other.

5. Pick-up according to claim 4, characterized in that of said amplifier stages the first (21), which is preferably an operational amplifier, has been connected to be a differential amplifier.

6. Pick-up according to any one of claims 1-5, characterized in that the voltage gain ($V_{out}/V_{in}$) of said amplifier circuit (21,22) is on the order of 30 to 45.

7. Pick-up according to any one of claims 1-6, characterized in that the distance (d) from the Hall element (10) of said body (14) of ferromagnetic material of which the distance is being observed is in the range $d \approx 0.5$ to 6 mm.

8. Pick-up according to any one of claims 1-8, characterized in that the output voltage ($V_{out}$) of said pick-up is on the order of $V_{out} \approx 1$ to 10 V.

1/1

0110122

**FIG. 1**

**FIG. 2**

**FIG. 3**

**FIG. 4**

**FIG. 5**

| | | | European Patent Office | **EUROPEAN SEARCH REPORT** | | |
|---|---|---|---|---|---|---|

## DOCUMENTS CONSIDERED TO BE RELEVANT

EP 83110654.7

| Category | Citation of document with indication, where appropriate, of relevant passages | Relevant to claim | CLASSIFICATION OF THE APPLICATION (Int. Cl. ³) |
|---|---|---|---|
| Y | DE - A1 - 2 825 214 (OTDEL FIZIKI)<br>* Page 6, line 31 - page 10, line 28; fig. 1,2,3 *<br>-- | 1,2,3,4 | G 01 B 7/14 |
| Y | CH - A - 557 018 (KRAUSS-MAFFEI)<br>* Totality *<br>-- | 1,2,3,4 | |
| X | CH - A - 447 629 (SIEMENS)<br>* Totality *<br>-- | 1 | |
| X | DE - A - 2 025 317 (FÖRSTER)<br>* Page 5, line 26 - page 6, line 9; claims 5,6,7; fig. 3 *<br>-- | 1 | |
| X<br>Y | DE - A1 - 2 702 641 (GORTAT)<br>* Totality *<br>-- | 1,4,<br>2 | **TECHNICAL FIELDS SEARCHED (Int. Cl. ³)**<br><br>G 01 B<br>G 01 N |
| Y | FR - A1 - 2 346 679 (SOCUTE DES PRODUITES)<br>* Page 2, line 33 - page 3, line 8; fig. *<br>---- | 2 | |

The present search report has been drawn up for all claims

| Place of search | Date of completion of the search | Examiner |
|---|---|---|
| VIENNA | 03-02-1984 | TOMASELLI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82